# EUROPEAN PATENT SPECIFICATION

(11) **EP 4 631 702 B1**
(45) Date of publication and mention of the grant of the patent: **11.11.2026**
(21) Application number: 25167990.8
(22) Date of filing: 02.04.2025
(51) Int. Cl.: B29C 65/36, B29C 65/50, B29C 65/78, B65B 9/12, B65B 9/20, B65B 9/22, B65B 51/22, B65B 51/26, H05B 6/40, B29K 705/02, B29L 31/00

(54) **INDUCTION HEATING DEVICE FOR A PACKAGING MACHINE**
INDUKTIONSHEIZVORRICHTUNG FÜR EINE VERPACKUNGSMASCHINE
DISPOSITIF DE CHAUFFAGE PAR INDUCTION POUR UNE MACHINE D'EMBALLAGE

(30) Priority: 09.04.2024 IT 202400007825
(43) Date of publication of application: 15.10.2025
(73) Proprietor: Tetra Laval Holdings & Finance S.A., 1009 Pully (CH)
(72) Inventor: BETTI BENEVENTI, Giovanni, 41123 MODENA (IT); CHRISTOFFERSSON, JONAS, 22186 Lund (SE); BABINI, Andrea, 41123 MODENA (IT); TANDOI, Giuseppe, 41123 MODENA (IT); DI PADOVA, Michele, 41123 MODENA (IT); SCARAMUZZINO, Tommaso, 41123 MODENA (IT)
(74) Representative: Tetra Pak Patent Attorneys

(56) References cited:
- EP-A1- 2 143 643
- EP-A1- 3 620 293
- WO-A1-97/22523
- WO-A2-00/64662
- US-A1- 2017 036 797

## Description

### TECHNICAL FIELD

The present invention relates to an induction heating device for a packaging machine configured to produce sealed packages containing a pourable product, preferably a pourable food product, starting from a web of packaging material, in particular a continuously advancing web of packaging material.

In particular, the induction heating device is configured for heating an area of the continuously advancing web of packaging material prior to the formation of the packages.

More in particular, the induction heating device is configured to heat the aforementioned area with the purpose of attaching a sealing strip made of heat-seal plastic material onto the web of packaging material and/or with the purpose of obtaining a longitudinal sealing onto the web folded into a tube for sealing such tube.

### BACKGROUND ART

As it is generally known, many pourable food products, such as fruit juice, UHT (ultra-high temperature-treated) milk, wine, tomato sauce, etc., are sold in packages made of sterilized packaging material.

A typical example is the parallelepiped-shaped package for pourable food products known as Tetra Brik Aseptic (registered trademark), which is made by folding and sealing a laminated web of packaging material.

The packaging material has a multilayer structure comprising a base layer, e.g. made of paper, covered on both sides with layers of heat-seal plastic material, e.g. polyethylene.

In the case of aseptic packages for long-storage products, such as UHT milk, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging lines, which comprise packaging machines configured to form and fill the packages starting from a multilayer packaging material.

In particular, according to a non-limiting example of a packaging machine, a continuous tube is formed starting from a web of packaging material initially wound in a reel and fed through a plurality of unwinding rollers. The continuously advancing web of packaging material is sterilized in the packaging machine, e.g. by applying a chemical sterilizing agent, such as hydrogen peroxide solution, which, once sterilization is completed, is removed from the surfaces of the packaging material, e.g. evaporated by heating. The web so sterilized is then maintained in a closed, sterile environment, and, continuously advanced by the aforementioned unwinding rollers, is folded and sealed longitudinally to form the tube by means of a known web folding unit.

Once created, the tube is fed continuously along a straight vertical direction, is filled with the sterilized food product from above and is formed, sealed and subsequently cut along equally spaced transversal cross-sections extending along a direction transversal, and in particular orthogonal, to the vertical direction.

So-called pillow packs are obtained thereby, which have a longitudinal sealing band, a top transversal sealing band and a bottom transversal sealing band.

The pillow packs are then cut at the cross-sections to be separated from one another and directed to a folding device for the final folding thereof.

The finished packages are thereby obtained.

The web of packaging material is continuously fed, before interacting with the web folding unit, through a device for applying a sealing strip of heat-seal plastic material, which is first applied on the packaging material.

More specifically, a first longitudinal portion of the sealing strip is applied and heat-sealed to a first longitudinal edge of the web.

In particular, the sealing strip is heat-sealed by locally melting the polyethylene layer at the first longitudinal edge and the heat-seal plastic of the first longitudinal portion of the strip itself.

After such application, a second longitudinal portion of the sealing strip protrudes (i.e. sticks out) from the first longitudinal edge.

The web folding device defines a series of passages for the web varying gradually in cross section from a C-shape to a substantially circular shape.

On interacting with the web folding device, a second longitudinal edge of the web, opposite to the first longitudinal edge, is laid on the outside of the first longitudinal edge with respect to the axis of the tube being formed.

In this way, the second longitudinal edge facing the axis of the tube is superimposed partly on the second longitudinal portion of the sealing strip and partly on the first longitudinal edge.

At this point, the sealing strip is applied to the web by performing a heating step and a pressing step.

More specifically, the heating step consists in locally melting the polyethylene layer at the second longitudinal edge and the heat-seal plastic of the second longitudinal portion of the strip itself.

The longitudinal sealing is thereby obtained.

According to a known solution, in order to perform the aforementioned heat-sealing, the presence of the aluminum layer is exploited.

In detail, in order to heat-seal the first longitudinal portion of the strip to the first longitudinal edge of the web, the packaging machine comprises a first induction heating device arranged upstream of the web folding unit and configured to heat the polyethylene layer at the first longitudinal edge of the web by induction heating the aluminum layer thereat.

Similarly, in order to heat-seal the second longitudinal portion of the strip to the second longitudinal edge of the web, the packaging machine comprises a second induction heating device arranged upstream of the web folding unit and configured to heat the polyethylene layer at the second longitudinal edge of the web by induction heating the aluminum layer thereat. Examples of sealing systems according to the prior art can be found in US2017/036797A1 and WO00/64662A2, of the same Applicant.

Although the packaging machines and the induction heating devices of the aforementioned type operate satisfyingly well, a desire is felt to further improve these latter, in particular as per improving the sealing quality while, at the same time, increasing the overall efficiency of the heat-sealing process.

### DISCLOSURE OF INVENTION

It is therefore an object of the present invention to provide an induction heating device which is designed to meet at least one of the above-mentioned needs in a straightforward and low-cost manner.

This object is achieved by an induction heating device as claimed in the appended independent claim 1. Preferred embodiments of the present invention are laid down in the appended dependent claims.

### BRIEF DESCRIPTION OF THE DRAWINGS

Non-limiting embodiments of the present invention will be described by way of example with reference to the accompanying drawings, in which:
Figure 1 is a schematic perspective view, with parts removed for clarity, of a packaging machine comprising a number of induction heating devices according to the present invention;
Figure 2 is a schematic lateral view, with parts removed for clarity, of an induction heating device of the packaging machine of Figure 1;
Figure 3 is a schematic lateral view, with parts removed for clarity, of an induction heating device of the packaging machine of Figure 1 according to an alternative embodiment; and
Figure 4 is a diagram showing a concentration of magnetic induction energy in the packaging material.

### BEST MODE FOR CARRYING OUT THE INVENTION

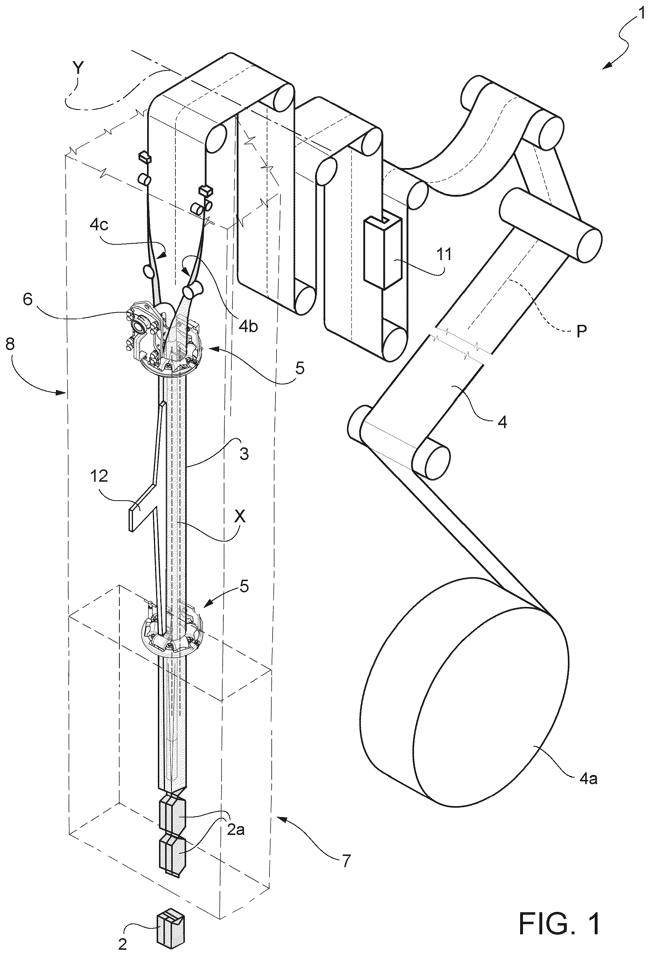

With reference to Figure 1, number 1 indicates as a whole a packaging machine configured to produce sealed packages 2 containing a pourable product, preferably a pourable food product such as pasteurized or UHT milk, water, fruit juice, wine, peas, beans, etc.

In particular, packaging machine 1 is configured to produce packages 2 starting from a multilayer web 4 of packaging material, which is initially wound in a reel 4a, and then folded into a tube 3 of packaging material, as explained below.

Preferably, packaging machine 1 is part of a packaging line (known per se and not shown) configured for producing, grouping and boxing a plurality of packages in a known manner.

Web 4 of packaging material has a multilayer structure (not shown), and comprises a layer of fibrous material, e.g. paper, covered on both sides with respective layers of heat-seal plastic material, e.g. polyethylene.

Moreover, web 4 comprises a layer of gas-and-light barrier material, preferably an aluminum foil, which is superimposed on a layer of heat-seal plastic material, and is in turn covered with another layer of heat-seal plastic material, the latter forming the inner face of package 2 eventually contacting the pourable product.

In detail, such layer of gas-and-light barrier material is a conductive layer made of an electrically conductive material, as said preferably aluminum.

As schematized in Figure 1, packaging machine 1 comprises:
- conveying means configured to continuously advance web 4 along an advancement path P;
- a web folding unit 5 configured to progressively fold the continuously advancing web 4 into a tube 3;
- a filling device 6 (only partially shown) for filling tube 3 (from above) with the pourable product;
- a forming and sealing unit 7 configured to form tube 3 and seal tube 3 along successive transversal cross-sections thereof in order to obtain a sequence of pillow packs 2a, in a manner known and not described in detail;
- an isolation chamber 8 internally defining an environment containing a controlled atmosphere, in particular sterile and/or aseptic gas, preferably sterile and/or aseptic air, and housing the forming and sealing unit 7, the web folding unit 5 and the filling device 6;
- a folding device (not shown) configured to sequentially fold packs 2a in order to obtain a plurality of sealed packages 2.

Preferably, forming and sealing unit 7 has an axis X along which tube 3 is fed, in use.

Axis X is parallel to a straight direction, which preferably is a straight vertical direction.

Hence, in use, tube 3 is fed along axis X, downwards, and while being filled from above is formed and sealed by forming and sealing unit 7.

More specifically, tube 3 is drawn (downwards) along axis X by forming and sealing unit 7 in a known manner.

In this way, a plurality of pillow packs 2a are obtained.

In light of the above, packaging machine 1 is configured to form and seal a plurality of pillow packs 2a containing the pourable product starting from web 4 and tube 3 and then to fold the pillow packs 2a for obtaining the aforementioned formed, sealed and folded packages 2 containing the pourable product.

Packaging machine 1 further comprises at least one induction heating device 10 configured to heat an area A of web 4 by induction-heating, i.e. heating through electromagnetic induction, the aforementioned conductive layer.

In particular, induction heating device 10 is configured to induction-heat area A prior to the complete folding of web 4 into tube 3.

In detail, as visible in Figure 1, packaging machine 1 comprises a sealing strip applicator device 11 of the known type configured to apply a sealing strip of heat-seal plastic material (not shown) to a first longitudinal edge 4b of web 4, while web 4 is continuously advanced along path P and prior to its folding into tube 3, and including an induction heating device 10 as described above.

In greater detail, according to a manner known and only briefly described hereinafter, applicator device 11 is configured to apply a first longitudinal portion of the sealing strip to first longitudinal edge 4b, in particular on the face of web 4 eventually forming the inside of each package 2. After such application, a second longitudinal portion of the sealing strip projects from such first longitudinal edge 4b, in a known manner.

Conveniently, the sealing strip is made of heat-seal plastic material, preferably of the same material of the outer layers of the packaging material, i.e. polyethylene.

It is specified that both plastic material layers of web 4 are here defined as "outer layer", even though one layer will become the outermost layer of package 2 and the other layer will become the innermost layer of package 2.

Applicator device 11 is configured to secure the first longitudinal portion of the sealing strip onto first longitudinal edge 4b of web 4 by heat-sealing the sealing strip to the web 4, and especially to the outer layer of plastic material thereof.

To this end, the induction heating device 10 of applicator device 11 induction-heats the aluminum layer at area A of web 4, thereby causing a localized melting of the outer layer of plastic material of web 4 which is located at area A, and partly also of the first longitudinal portion of the sealing strip applied to first longitudinal edge 4b.

Accordingly, area A is located in the vicinity of first longitudinal edge 4b.

In particular, area A extends longitudinally along edge 4b.

In use, by interacting with web folding unit 5, a second longitudinal edge 4c of web 4 is laid onto first longitudinal edge 4b, thereby progressively arranging web 4 from a sheet configuration into an intermediate C-shaped configuration and then into a tube configuration. In this way, the second longitudinal portion of the sealing strip is brought towards such second longitudinal edge 4c, and applied thereto.

In order to seal tube 3, packaging machine 1 further comprises a tube sealing device 12 configured to longitudinally seal tube 3, in particular the continuously advancing tube 3.

In detail, tube sealing device 12 is configured to heat-seal the second longitudinal portion of the sealing strip to the second longitudinal edge 4c of web 4, and the second longitudinal edge 4c to first longitudinal edge 4b.

To this end, second longitudinal edge 4c must be heated.

To this regard, tube sealing device 12 includes an induction heating device 10 as described above. Such induction heating device 10 is configured to secure the second longitudinal edge 4c on the first longitudinal edge 4b.

More specifically, such induction heating device 10 secures second longitudinal portion of the sealing strip onto second longitudinal edge 4c of web 4 by heat-sealing the sealing strip to the web 4, and especially to the outer layer of plastic material thereof, and then secures second longitudinal edge 4c, with the sealing strip attached thereon, on the first longitudinal edge 4b. A longitudinal sealing line is therefore defined, which is covered, on the face of the packaging material which will define the internal wall of the packages 2, by the sealing strip.

More specifically, the induction heating device 10 of tube sealing unit 12 induction-heats the aluminum layer at an area A of web 4 located in the vicinity of second longitudinal edge 4c, thereby causing a localized melting of the outer layer of plastic material of web 4 at second longitudinal edge 4c.

Hence, an area A is located also at said second longitudinal edge 4c.

Also in this case, such area A extends longitudinally along edge 4c.

In light of the above, packaging machine 1 comprises two induction heating devices 10, each configured to heat an area A of web 4, which area A is located in the vicinity of a respective longitudinal edge 4b, 4c of web 4, by induction-heating the aforementioned conductive layer of web 4.

More precisely, the induction heating device 10 is configured to heat the aforementioned area A with the purpose of attaching a sealing strip made of heat-seal plastic material onto web 4 and/or with the purpose of obtaining a longitudinal sealing onto web 4 folded into a tube 3 for sealing such tube 3.

For the sake of brevity, reference will be made in the following to a single induction heating device 10 configured to heat the area A of web 4 located in the vicinity of longitudinal edge 4b. However, the structural and functional features described for such induction heating device 10 are equally applicable to the induction heating device 10 present in packaging machine 1 configured to heat an area A of continuously advancing web located in the vicinity of longitudinal edge 4b or longitudinal edge 4c.

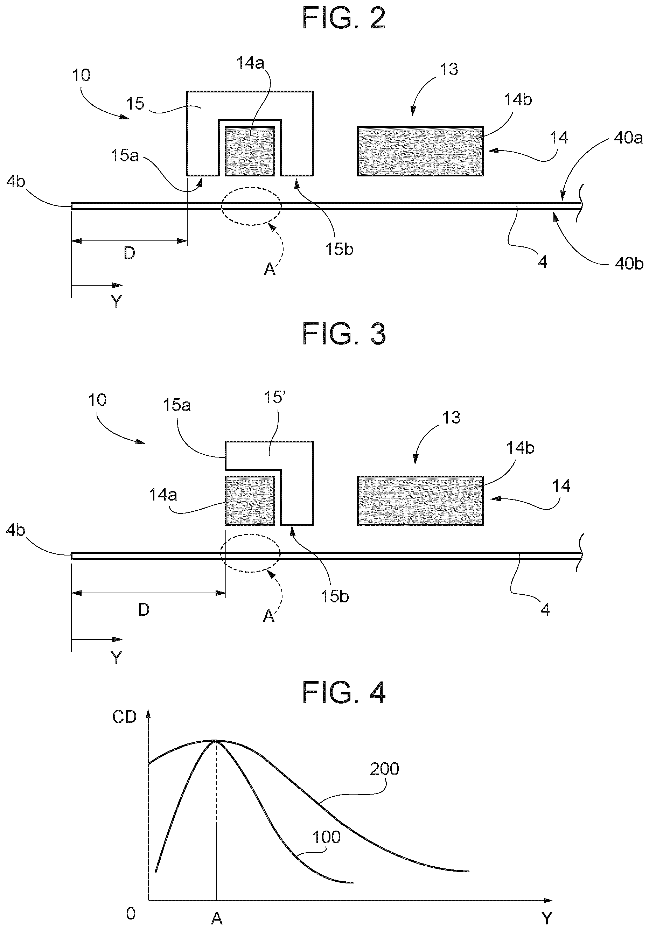

With reference to Figure 2, induction heating device 10 comprises an electrical circuit 13 (shown only partially in cross-section) having at least one conductor member 14 configured to face web 4, i.e. facing a first surface 40a of web 4 in use, and configured to produce an electromagnetic field defining a magnetic flux.

In detail, conductor member 14 is configured to be fed with an electric current, i.e. it is configured to convey an electric current, so as to induce a current in the conductive layer of web 4, at area A.

In greater detail, conductor member 14 comprises:
- an active portion 14a, which is configured to face the area A of web 4 to be heated; and
- a return portion 14b, which is configured to recirculate the electric current towards the active portion 14a.

Conveniently, active portion 14a has a cross-section narrower than the cross-section of return portion 14b.

In this way, the induction-heating effect is accentuated at the area A of web 4 facing the active portion 14a, due to an operative property of the induction heaters.

In use, the electromagnetic field produced by electrical circuit 13, and especially the one defined by the electric current flowing through active portion 14a, defines a magnetic flux which hits web 4 and interacts with the conductive layer of web 4.

Therefore, according to a well-known process, a current is induced in the conductive layer, which ultimately heats up (Joule effect).

According to an aspect of the present disclosure, induction heating device 10 comprises a magnetic flux concentrator member 15 (hereinafter called "concentrator" for the sake of simplicity) associated with conductor member 14 and configured to concentrate the magnetic flux at the aforementioned area A of web 4 to be heated.

More precisely, concentrator 15 is configured to canalize the magnetic flux defined by the electromagnetic field produced by conductor member 14 at area A, so as to produce a peak in the induced current density defined by the electromagnetic field at area A, so that induction heating device 10 concentrates the induction heating at area A.

With the expression "concentrate the magnetic flux" or "canalize the magnetic flux" it is intended that the lines of the electromagnetic field are concentrated at, and through, area A of web 4, thereby leading in a localized increase in the current density at the surface of conductor member 14 facing web 4, and at area A of the conductive layer of web 4.

In other words, the Applicant has observed, through an extensive experimental campaign, that concentrator 15 increases the density of the induced current at area A, and also concentrates such induced current at area A avoiding a current density dispersion around area A.

This condition is schematically depicted in the diagram of Figure 4, which represents the current density distribution CD transversally along web 4, i.e. along a direction Y transversal, and in particular orthogonal, to a longitudinal direction of web 4, and starting from a coordinate Y=0 representing the longitudinal edge 4b of web 4 which is proximal to the area A to be heated.

Curve 100 is associated with an induction heating device 10 according to the invention and comprising a concentrator 15, whereas curve 200 is associated with an induction heating device without any magnetic flux concentrator member.

By comparing curves 100 and 200, it is clearly visible how the current density distribution CD is more concentrated at area A with less dispersion around area A in curve 100, while in curve 200 the current density distribution CD remains higher than in curve 100 in the zone adjacent to area A.

This implies various advantages compared to an induction heating device without a concentrator 15:
- the desired peak in current density can be reached with a smaller level of electric power, thereby leading to higher efficiency, power savings and more environmentally-friendly machines;
- the sealing of tube 3 and/or the application of the sealing strip is more precise and effective;
- the presence of concentrator 15 highly reduces the risk of defects in web 4 at the heated area A and in the vicinity of area A, for example at longitudinal edge 4b.

Furthermore, it has been known the need for reducing the thickness of the conductive layer of web 4.

This thickness reduction leads to a necessary increase in the frequency of the electric current to be fed to electrical circuit 13 and through conductor member 14, to maintain the desired level of heating in the conductive layer, and therefore to a significative increase in the electric power needed.

The presence of concentrator 15 allows for maintaining the current density distribution CD around area A under control, i.e. under a desired threshold value for which the risk of defects is low, even in the case in which conductor member 14 needs to be fed with a high frequency electric current.

Concentrator 15 is configured to face first surface 40a and is thereby configured to concentrate the magnetic flux at the aforementioned area A of web 4 through the first surface 40a.

According to an alternative embodiment not shown, electrical circuit 13 comprises a second conductor member 14 configured to face a second surface 40b of web 4, second surface 40b being opposite to first surface 40a, i.e. facing second surface 40b of web 4 in use, and configured to produce an electromagnetic field defining a magnetic flux.

Accordingly, induction heating device 10 comprises a second magnetic flux concentrator member 15 associated with second conductor member 14 and configured to concentrate the magnetic flux at the aforementioned area A of web 4 to be heated. Such second concentrator 15 is configured to face second surface 40b and is thereby configured to concentrate the magnetic flux at the aforementioned area A of web 4 through the second surface 40b.

The Applicant has observed that the presence of two conductor members 14 and of two concentrators 15 respectively associated therewith, arranged on both sides of web 4, improves the quality of the sealing, as the heat generation by induction is more uniform. In fact, possible fluctuations in the induction heat generated in the area A, due to micro-deviations or oscillations in positioning of web 4, which is continuously advancing, are "averaged" by the presence of the two conductor members 14 and the two concentrators 15.

Advantageously, as visible in Figure 2, concentrator 15 is associated with active portion 14a.

In particular, concentrator 15 surrounds partially active portion 14a of conductor member 14.

More in particular, active portion 14a extends longitudinally, so as to be substantially parallel, in use, to a longitudinal extension direction of web 4 (orthogonal to direction Y).

Accordingly, concentrator 15 extends longitudinally and substantially parallel to active portion 14a.

Conveniently, concentrator 15 has a cross-section with an open profile having a first free end portion 15a and a second free end portion 15b, so that the lines of the electromagnetic field produced by active portion 14a of conductor member 14 travel, in use, from first free end portion 15a to the second free end portion 15b and through area A of web **4.**

To this end, at least active portion 14a of conductor member 14 must be placed at an appropriate distance from web 4, and especially from area A.

According to the non-limiting embodiment shown in Figure 2, concentrator 15 has a substantially C-shaped cross-section (or an upside-down U-shaped cross-section, according to the orientation of Figure 2) and surrounds conductor member 14, and in particular active portion 14a, on three sides thereof, thereby defining a region of space through which said lines of electromagnetic field travel, in use, from first free end portion 15a to second free end portion 15b and passing through area A.

Appropriately, concentrator 15 leaves free, i.e. does not cover, i.e. does not surround, the side of conductor member 14, and in particular of active portion 14a thereof, which faces in use area A.

The Applicant has found that such configuration of concentrator 15 allows for an optimal concentration of the magnetic flux, i.e. of the lines of the electromagnetic field produced by the active portion 14a, at area A, thereby leading to an improved heat generation leading to the advantages listed above.

Opportunely, concentrator 15 includes ferromagnetic material, i.e. is made of a ferromagnetic material.

Advantageously, concentrator 15 is made of a material including plasto-ferrite or magnetic rubber.

In this way, the production of concentrator 15 is significantly simplified, since it can be produced in a rather easy manner by injection molding.

This leads also to a significant reduction in production costs.

Furthermore, the adaptability of concentrator 15 is increased, since its production by injection molding allows to easily obtain whatever desired shape thereof.

According to a further aspect of the present disclosure, conductor member 14 and concentrator 15 are configured to be arranged so as to face a portion of web 4, defining area A to be heated, proximal to longitudinal edge 4b of web 4, so that area A is located at a preferably non-zero distance D from such longitudinal edge 4b towards the central part of web 4. Preferably, distance D is comprised between 0.1 mm and 5 mm, more preferably between 1 mm and 4 mm.

That is, area A does not include longitudinal edge 4b, or longitudinal edge 4b is not part of area A.

Preferably, concentrator 15 is offset of a distance D from longitudinal edge 4b towards the central part of web 4.

This configuration further reduces the risks of defects in the vicinity of longitudinal edge 4b and further improves the quality of the sealing.

According to an alternative embodiment not shown, concentrator 15 is offset of a distance D from longitudinal edge 4b and protrudes from longitudinal edge 4b.The Applicant has observed that such a configuration may be advantageous in certain cases and for certain packaging materials.

By varying the positioning of concentrator 15 with respect to longitudinal edge 4b, it is possible to vary the position of the zone of maximum concentration of the magnetic flux.

Figure 3 shows an induction heating device 10 according to an alternative embodiment of the present invention. Such induction heating device 10 differs from the induction heating device 10 described above only by the fact that includes a concentrator 15' having a substantially L-shaped cross-section surrounding conductor member 14, and in particular the active portion 14a thereof, on two sides thereof.

Similarly to the above, the L-shaped concentrator 15' of Figure 3 defines a region of space through which the lines of electromagnetic field produced by active portion 14a travel, in use, from first free end portion 15a to second free end portion 15b and through area A.

The Applicant has noted that the L-shaped concentrator 15' retains the same advantages listed above for the C-shaped concentrator 15 and further reduces production costs, due to the smaller quantity of material needed.

Moreover, L-shaped concentrator 15' allows to obtain further technical effects, which will be explained below.

In one advantageous embodiment, concentrator 15' partially surrounds conductor member 14, and in particular active portion 14a, so that the L-shaped cross-section is arranged on a side of conductor member 14, and in particular of active portion 14a, distal/opposite with respect to longitudinal edge 4b.

That is, concentrator 15' is arranged so that the L-shaped cross-section surrounds the two contiguous sides of active portion 14a of conductor member 14 which are distal from / opposite to longitudinal edge 4b.

Such configuration is depicted in Figure 3.

The Applicant has observed that such configuration is particularly advantageous in regard of the reduction of risk of defects at the longitudinal edge 4b of web 4.

In fact, in the region around conductor member 14 which is not surrounded by concentrator 15', the magnetic flux concentration is weaker compared to the region surrounded by concentrator 15'. Hence, the current density in the region of the conductive layer of web 4 facing the aforementioned region around conductor member 14 not surrounded by concentrator 15' is lower. Therefore, in such a region of web 4, less heating is produced, which ultimately leads to a significative reduction in the risk of defects at the longitudinal edge 4b proximal to area A.

In other words, by changing the shape of the cross-section of concentrator 15, 15', and in particular by providing a concentrator 15' with the L-shaped cross-section arranged as described above, the peak of current density distribution CD at area A can be further removed from the longitudinal edge 4b without the need for actually displacing concentrator 15' and conductor member 14 any further from such longitudinal edge 4b.

That is, the distance D at which the peak of current density distribution CD is arranged from the longitudinal edge 4b is greater with L-shaped concentrator 15' than with C-shaped concentrator 15.

As said, such configuration leads to a better space organization, to less defects at longitudinal edge 4b, to material savings and, ultimately, to reduced overall costs.

According to an alternative embodiment not shown, concentrator 15' partially surrounds conductor member 14, and in particular active portion 14a, so that the L-shaped cross-section is arranged on a side of conductor member 14, and in particular of active portion 14a, proximal to longitudinal edge 4b.

That is, concentrator 15' is arranged so that the L-shaped cross-section surrounds the two contiguous sides of active portion 14a of conductor member 14 which are proximal to longitudinal edge 4b.

The Applicant has observed that such configuration of concentrator 15' is desirable in certain cases and for packaging materials of a certain nature, in order to reduce the risk of shrinkage in the heat-seal layer at longitudinal edge 4b.

The advantages of induction heating device 10 according to the present invention will be clear from the foregoing description.

In particular, thanks to the presence of concentrator 15, 15', the current density distribution CD is more concentrated at the area A to be heated with less dispersion around such area A along the direction Y of web 4.

This implies that the current density at the longitudinal edge 4b, 4c proximal to the area A to be heated is lower compared with the case in which no concentrator 15, 15' is present in induction heating device 10, which leads to a reduced risk of defects at longitudinal edge 4b, 4c.

In other words, the presence of concentrator 15, 15' allows for maintaining the current density distribution CD around area A under control, i.e. under a desired threshold value for which the risk of defect is low, even in the case in which conductor member 14 needs to be fed with a high frequency electric current.

Furthermore, thanks to the presence of concentrator 15, 15', the desired peak in current density can be reached with a smaller level of electric power, thereby leading to higher efficiency, power savings and more environmentally-friendly machines.

Moreover, the sealing of tube 3 and/or the application of the sealing strip is more precise and effective.

Clearly, changes may be made to induction heating device 10 as described herein without, however, departing from the scope of protection as defined in the accompanying claims.

## Claims

1. Induction heating device (10) for a packaging machine (1) configured to produce sealed packages (2) containing a pourable product starting from a continuously advancing multilayer web (4) of packaging material including a conductive layer made of an electrically conductive material,
wherein the induction heating device (10) is configured to continuously heat an area (A) of the advancing web (4) of packaging material by induction-heating the conductive layer,
and wherein the induction heating device (10) comprises:
- an electrical circuit (13) having at least one conductor member (14) configured to face the web (4) of packaging material and to produce an electromagnetic field configured to interact with the web (4) and the conductive layer thereof, the electromagnetic field defining a magnetic flux;
- a magnetic flux concentrator member (15; 15') associated with the conductor member (14) and configured to concentrate the magnetic flux at said area (A) of the web (4) of packaging material;
wherein the magnetic flux concentrator member (15; 15') is configured to canalize the magnetic flux at said area (A) so as to produce a peak in the induced current density defined by said electromagnetic field at said area (A), so that the induction heating device (10) concentrates the induction heating at said area (A) of the continuously advancing web (4) of packaging material,
wherein the conductor member (14) is configured to convey an electric current and comprises an active portion (14a), which is configured to face said area (A) of the web (4) of packaging material to be heated, and a return portion (14b), which is configured to recirculate the electric current towards the active portion (14a);
and wherein the magnetic flux concentrator member (15; 15') is associated with said active portion (14a);
wherein the magnetic flux concentrator member (15; 15') partially surrounds the active portion (14a) of the conductor member (14),
wherein the magnetic flux concentrator member (15; 15') has a cross-section with an open profile having a first free end portion (15a) and a second free end portion (15b),
wherein the magnetic flux concentrator member (15') has a substantially L-shaped cross-section and surrounds the conductor member (14) on two sides thereof.

2. Induction heating device as claimed in claim 1, wherein the conductor member (14) is configured to face a first surface (40a) of the web (4) and wherein the magnetic flux concentrator member (15; 15') is configured to concentrate the magnetic flux at said area (A) of the web (4) of packaging material through said first surface (40a);
wherein the electrical circuit (13) has a second conductor member (14) configured to face a second surface (40b) of the web (4);
wherein the induction heating device (10) comprises a second magnetic flux concentrator member (15; 15') associated with the second conductor member (14) and configured to concentrate the magnetic flux at said area (A) of the web (4) of packaging material through said second surface (40b).

3. Induction heating device as claimed in any one of the foregoing claims, wherein the conductor member (14) and the magnetic flux concentrator member (15; 15') are configured to be arranged so as to face a portion of the web (4) of packaging material, defining said area (A), proximal to a longitudinal edge (4b; 4c) of web (4) of packaging material, so that said area (A) is located at a non-zero distance (D) from such longitudinal edge (4b; 4c) towards the central part of the web (4), preferably between 0.1 mm and 5 mm, more preferably between 1 mm and 4 mm.

4. Induction heating device as claimed in any of the previous claims, wherein the magnetic flux concentrator member (15') partially surrounds the conductor member (14) so that the L-shaped cross-section is arranged on a side of the conductor member (14) distal/opposite with respect to the longitudinal edge (4b; 4c).

5. Induction heating device as claimed in any one of the foregoing claims, wherein the magnetic flux concentrator member (15; 15') is made of a material including plasto-ferrite or magnetic rubber.

6. Induction heating device as claimed in any one of the foregoing claims, wherein the induction heating device (10) is configured to be implemented in a sealing strip applicator device (11) configured to apply a sealing strip of heat-seal plastic material to a longitudinal edge (4b) of the web (4) prior to its folding into a tube (3).

7. Induction heating device as claimed in any of the previous claims, wherein the induction heating device (10) is configured to be implemented in a tube sealing unit (12) configured to longitudinally seal a tube (3) formed by folding the web (4) of packaging material.

8. Packaging machine (1) configured to produce sealed packages (2) containing a pourable product starting from a multilayer web (4) of packaging material including a conductive layer made of an electrically conductive material, the packaging machine (1) comprising:
- conveying means configured to advance the web (4);
- a web folding unit (5) configured to fold the web (4) into a tube (3);
- a forming and sealing unit (7) configured to form the tube (3) and seal the tube (3) along successive transversal cross-sections thereof in order to obtain a sequence of packs (2a);
- a folding device configured to sequentially fold the packs (2a) in order to obtain a plurality of sealed packages (2);
- an induction heating device (10) as claimed in any one of the foregoing claims and configured to induction-heat an area (A) of the web (4) prior to its complete folding into a tube (3).

9. Packaging machine as claimed in the previous claim, and comprising:
- a sealing strip applicator device (11) configured to apply a sealing strip of heat-seal plastic material to a longitudinal edge (4b) of the web (4) prior to its folding into a tube (3) and including an induction heating device (10) as claimed in any one of the foregoing claims 1 to 7; and/or
- a tube sealing unit (12) configured to longitudinally seal the tube (3) and including an induction heating device (10) as claimed in any one of the foregoing claims 1 to 7.

## Patentansprüche

1. Induktionsheizvorrichtung (10) für eine Verpackungsmaschine (1), die dazu ausgelegt ist, versiegelte Verpackungen (2) mit einem fließfähigen Produkt herzustellen, ausgehend von einer kontinuierlich vorlaufenden mehrschichtigen Bahn (4) aus Verpackungsmaterial, die eine leitfähige Schicht aus einem elektrisch leitfähigen Material enthält,
wobei die Induktionsheizvorrichtung (10) dazu ausgelegt ist, einen Bereich (A) der vorlaufenden Bahn (4) aus Verpackungsmaterial durch Induktionserwärmung der leitfähigen Schicht kontinuierlich zu erwärmen,
und wobei die Induktionsheizvorrichtung (10) umfasst:
- einen elektrischen Schaltkreis (13) mit mindestens einem Leiterelement (14), das so ausgelegt ist, dass es der Bahn (4) aus Verpackungsmaterial zugewandt ist und ein elektromagnetisches Feld erzeugt, das so ausgelegt ist, dass es mit der Bahn (4) und deren leitfähiger Schicht in Wechselwirkung tritt, wobei das elektromagnetische Feld einen Magnetfluss definiert;
- ein dem Leiterelement (14) zugeordnetes Magnetflusskonzentratorelement (15; 15'), das so ausgelegt ist, dass es den Magnetfluss auf den genannten Bereich (A) der Verpackungsmaterialbahn (4) konzentriert;
wobei das Magnetflusskonzentratorelement (15; 15') so ausgebildet ist, dass es den Magnetfluss an dem genannten Bereich (A) kanalisiert, um eine Spitze in der durch das genannte elektromagnetische Feld definierten induzierten Stromdichte an dem genannten Bereich (A) zu erzeugen, sodass die Induktionsheizvorrichtung (10) die Induktionserwärmung auf den genannten Bereich (A) der kontinuierlich vorrückenden Bahn (4) aus Verpackungsmaterial konzentriert,
wobei das Leiterelement (14) so ausgebildet ist, dass es einen elektrischen Strom leitet, und einen aktiven Abschnitt (14a), der so ausgebildet ist, dass er dem zu erwärmenden Bereich (A) der Verpackungsmaterialbahn (4) zugewandt ist, sowie einen Rücklaufabschnitt (14b) umfasst, der so ausgebildet ist, dass er den elektrischen Strom zum aktiven Abschnitt (14a) zurückleitet;
und wobei das Magnetflusskonzentratorelement (15; 15') dem aktiven Abschnitt (14a) zugeordnet ist;
wobei das Magnetflusskonzentratorelement (15; 15') den aktiven Abschnitt (14a) des Leiterelements (14) teilweise umgibt,
wobei das Magnetflusskonzentratorelement (15; 15') einen Querschnitt mit einem offenen Profil aufweist, das einen ersten freien Endabschnitt (15a) und einen zweiten freien Endabschnitt (15b) aufweist,
wobei das Magnetflusskonzentratorelement (15') einen im Wesentlichen L-förmigen Querschnitt aufweist und das Leiterelement (14) an zwei Seiten umgibt.

2. Induktionsheizvorrichtung nach Anspruch 1, wobei das Leiterelement (14) so ausgebildet ist, dass es einer ersten Oberfläche (40a) der Bahn (4) zugewandt ist , und wobei das Magnetflusskonzentratorelement (15; 15') so ausgebildet ist, dass es den Magnetfluss auf den genannten Bereich (A) der Bahn (4) aus Verpackungsmaterial durch die genannte erste Oberfläche (40a) hindurch konzentriert;
wobei der Stromkreis (13) ein zweites Leiterelement (14) aufweist, das so ausgebildet ist, dass es einer zweiten Oberfläche (40b) der Bahn (4) zugewandt ist;
wobei die Induktionsheizvorrichtung (10) ein zweites Magnetflusskonzentratorelement (15; 15') umfasst, das dem zweiten Leiterelement (14) zugeordnet und so ausgebildet ist, dass es den Magnetfluss auf den genannten Bereich (A) der Bahn (4) aus Verpackungsmaterial durch die genannte zweite Oberfläche (40b) zu konzentrieren.

3. Induktionsheizvorrichtung nach einem der vorstehenden Ansprüche, wobei das Leiterelement (14) und das Magnetflusskonzentratorelement (15; 15') so angeordnet sind, dass sie einem Abschnitt der Bahn (4) aus Verpackungsmaterial zugewandt sind, der den Bereich (A) definiert und nahe einer Längskante (4b; 4c) der Verpackungsmaterialbahn (4) liegt, so dass sich der Bereich (A) in einem Abstand (D) ungleich Null von dieser Längskante (4b; 4c) in Richtung des mittleren Teils der Bahn (4) befindet, vorzugsweise zwischen 0,1 mm und 5 mm, noch bevorzugter zwischen 1 mm und 4 mm.

4. Induktionsheizvorrichtung nach einem der vorstehenden Ansprüche, wobei das Magnetflusskonzentratorelement (15') das Leiterelement (14) teilweise umgibt, sodass der L-förmige Querschnitt auf einer Seite des Leiterelements (14) angeordnet ist, die von der Längskante (4b; 4c) entfernt bzw. dieser gegenüberliegt.

5. Induktionsheizvorrichtung nach einem der vorstehenden Ansprüche, wobei das Magnetflusskonzentratorelement (15; 15') aus einem Material besteht, das Plastoferrit oder Magnetkautschuk enthält.

6. Induktionsheizvorrichtung nach einem der vorstehenden Ansprüche, wobei die Induktionsheizvorrichtung (10) so ausgelegt ist, dass sie in einer Versiegelungsstreifen-Aufbringvorrichtung (11) eingesetzt werden kann, die dazu ausgelegt ist, einen Versiegelungsstreifen aus heißsiegelbarem Kunststoffmaterial auf eine Längskante (4b) der Bahn (4) aufzubringen, bevor diese zu einem Schlauch (3) gefaltet wird.

7. Induktionsheizvorrichtung nach einem der vorstehenden Ansprüche, wobei die Induktionsheizvorrichtung (10) so ausgelegt ist, dass sie in einer Schlauchversiegelungseinheit (12) eingesetzt werden kann, die dazu ausgelegt ist, einen durch Falten der Bahn (4) aus Verpackungsmaterial gebildeten Schlauch (3) in Längsrichtung zu versiegeln.

8. Verpackungsmaschine (1), die dazu ausgelegt ist, versiegelte Verpackungen (2) herzustellen, die ein fließfähiges Produkt enthalten, ausgehend von einer mehrschichtigen Bahn (4) aus Verpackungsmaterial, die eine leitfähige Schicht aus einem elektrisch leitfähigen Material umfasst, wobei die Verpackungsmaschine (1) umfasst:
- eine Fördereinrichtung, die dazu ausgelegt ist, die Bahn (4) vorwärts zu bewegen;
- eine Bahnfaltungseinheit (5), die dazu ausgelegt ist, die Bahn (4) zu einem Schlauch (3) zu falten;
- eine Form- und Versiegelungseinheit (7), die dazu ausgelegt ist, den Schlauch (3) zu formen und den Schlauch (3) entlang aufeinanderfolgender Querschnitte desselben zu versiegeln, um eine Folge von Verpackungen (2a) zu erhalten;
- eine Faltvorrichtung, die dazu ausgelegt ist, die Packungen (2a) nacheinander zu falten, um eine Vielzahl von versiegelten Verpackungen (2) zu erhalten;
- eine Induktionsheizvorrichtung (10) gemäß einem der vorstehenden Ansprüche, die dazu ausgelegt ist, einen Bereich (A) der Bahn (4) vor deren vollständigem Falten zu einem Schlauch (3) induktiv zu erwärmen.

9. Verpackungsmaschine nach dem vorstehenden Anspruch, umfassend:
- eine Versiegelungsstreifen-Aufbringvorrichtung (11), die dazu ausgelegt ist, einen Versiegelungsstreifen aus heißsiegelbarem Kunststoffmaterial auf eine Längskante (4b) der Bahn (4) aufzubringen, bevor diese zu einem Schlauch (3) gefaltet wird, und die eine Induktionsheizvorrichtung (10) gemäß einem der vorstehenden Ansprüche 1 bis 7 umfasst; und/oder
- eine Schlauchversiegelungseinheit (12), die dazu ausgelegt ist, den Schlauch (3) in Längsrichtung zu versiegeln, und eine Induktionsheizvorrichtung (10) gemäß einem der vorstehenden Ansprüche 1 bis 7 umfasst.

## Revendications

1. Dispositif de chauffage par induction (10) destiné à une machine d'emballage (1) configurée pour produire des emballages scellés (2) contenant un produit versable à partir d'une bande multicouche (4) de matériau d'emballage avançant en continu et comprenant une couche conductrice constituée d'un matériau électriquement conducteur,
dans lequel le dispositif de chauffage par induction (10) est conçu pour chauffer en continu une zone (A) de la bande (4) de matériau d'emballage en mouvement en chauffant par induction la couche conductrice,
et dans lequel le dispositif de chauffage par induction (10) comprend :
- un circuit électrique (13) comportant au moins un élément conducteur (14) agencé pour faire face à la bande (4) de matériau d'emballage et pour produire un champ électromagnétique destiné à interagir avec la bande (4) et sa couche conductrice, le champ électromagnétique définissant un flux magnétique ;
- un élément concentrateur de flux magnétique (15 ; 15') associé à l'élément conducteur (14) et agencé pour concentrer le flux magnétique au niveau de ladite zone (A) de la bande (4) de matériau d'emballage ;
dans lequel l'élément concentrateur de flux magnétique (15 ; 15') est agencé pour canaliser le flux magnétique au niveau de ladite zone (A) de manière à produire un pic de densité de courant induit défini par ledit champ électromagnétique au niveau de ladite zone (A), de sorte que le dispositif de chauffage par induction (10) concentre le chauffage par induction au niveau de ladite zone (A) de la bande (4) de matériau d'emballage avançant en continu,
dans lequel l'élément conducteur (14) est configuré pour transporter un courant électrique et comprend une partie active (14a), qui est configurée pour faire face à ladite zone (A) de la bande (4) de matériau d'emballage à chauffer, et une partie de retour (14b), qui est configurée pour faire recirculer le courant électrique vers la partie active (14a) ;
et dans lequel l'élément concentrateur de flux magnétique (15 ; 15') est associé à ladite partie active (14a) ;
dans lequel l'élément concentrateur de flux magnétique (15 ; 15') entoure partiellement la partie active (14a) de l'élément conducteur (14),
dans lequel l'élément concentrateur de flux magnétique (15 ; 15') présente une section transversale à profil ouvert comportant une première partie d'extrémité libre (15a) et une deuxième partie d'extrémité libre (15b),
dans lequel l'élément concentrateur de flux magnétique (15') présente une section transversale sensiblement en forme de L et entoure l'élément conducteur (14) sur deux de ses côtés.

2. Dispositif de chauffage par induction selon la revendication 1, dans lequel l'élément conducteur (14) est configuré pour faire face à une première surface (40a) de la bande (4) et dans lequel l'élément concentrateur de flux magnétique (15 ; 15') est configuré pour concentrer le flux magnétique au niveau de ladite zone (A) de la bande (4) de matériau d'emballage à travers ladite première surface (40a) ;
dans lequel le circuit électrique (13) comporte un deuxième élément conducteur (14) agencé pour faire face à une deuxième surface (40b) de la bande (4) ;
dans lequel le dispositif de chauffage par induction (10) comprend un deuxième élément concentrateur de flux magnétique (15 ; 15') associé au deuxième élément conducteur (14) et configuré pour concentrer le flux magnétique au niveau de ladite zone (A) de la bande (4) de matériau d'emballage à travers ladite deuxième surface (40b).

3. Dispositif de chauffage par induction selon l'une quelconque des revendications précédentes, dans lequel l'élément conducteur (14) et l'élément concentrateur de flux magnétique (15 ; 15') sont agencés de manière à faire face à une partie de la bande (4) de matériau d'emballage, définissant ladite zone (A), proche d'un bord longitudinal (4b ; 4c) de la bande (4) de matériau d'emballage, de sorte que ladite zone (A) soit située à une distance non nulle (D) de ce bord longitudinal (4b ; 4c) en direction de la partie centrale de la bande (4), de préférence comprise entre 0,1 mm et 5 mm, et de manière plus préférentielle entre 1 mm et 4 mm.

4. Dispositif de chauffage par induction selon l'une quelconque des revendications précédentes, dans lequel l'élément concentrateur de flux magnétique (15') entoure partiellement l'élément conducteur (14) de telle sorte que la section transversale en forme de L soit disposée sur un côté de l'élément conducteur (14) distal/opposé par rapport au bord longitudinal (4b ; 4c).

5. Dispositif de chauffage par induction selon l'une quelconque des revendications précédentes, dans lequel l'élément concentrateur de flux magnétique (15 ; 15') est constitué d'un matériau comprenant de la plasto-ferrite ou du caoutchouc magnétique.

6. Dispositif de chauffage par induction selon l'une quelconque des revendications précédentes, dans lequel le dispositif de chauffage par induction (10) est configuré pour être intégré dans un dispositif d'application de bande de scellage (11) configuré pour appliquer une bande de scellage en matière plastique thermosoudable sur un bord longitudinal (4b) de la bande (4) avant son pliage en tube (3).

7. Dispositif de chauffage par induction selon l'une quelconque des revendications précédentes, dans lequel le dispositif de chauffage par induction (10) est configuré pour être mis en œuvre dans une unité de scellage de tubes (12) configurée pour sceller longitudinalement un tube (3) formé par pliage de la bande (4) de matériau d'emballage.

8. Machine d'emballage (1) configurée pour produire des emballages scellés (2) contenant un produit versable à partir d'une bande multicouche (4) de matériau d'emballage comprenant une couche conductrice en un matériau électriquement conducteur, la machine d'emballage (1) comprenant :
- des moyens de transport configurés pour faire avancer la bande (4) ;
- une unité de pliage de bande (5) configurée pour plier la bande (4) en un tube (3) ;
- une unité de formage et de scellage (7) configurée pour former le tube (3) et sceller le tube (3) le long de ses sections transversales successives afin d'obtenir une séquence d'emballages (2a) ;
- un dispositif de pliage configuré pour plier séquentiellement les paquets (2a) afin d'obtenir une pluralité d'emballages scellés (2) ;
- un dispositif de chauffage par induction (10) tel que revendiqué dans l'une quelconque des revendications précédentes et configuré pour chauffer par induction une zone (A) de la bande (4) avant son pliage complet en un tube (3).

9. Machine d'emballage selon la revendication précédente, et comprenant :
- un dispositif d'application de bande de scellage (11) configuré pour appliquer une bande de scellage en matière plastique thermoscellable sur un bord longitudinal (4b) de la bande (4) avant son pliage en un tube (3) et comprenant un dispositif de chauffage par induction (10) selon l'une quelconque des revendications précédentes 1 à 7 ; et/ou
- une unité de scellage de tube (12) configurée pour sceller longitudinalement le tube (3) et comprenant un dispositif de chauffage par induction (10) tel que revendiqué dans l'une quelconque des revendications 1 à 7 ci-précédentes.
